# EUROPÄISCHE PATENTSCHRIFT

(11) **EP 1 836 484 B1**
(45) Veröffentlichungstag und Bekanntmachung des Hinweises auf die Patenterteilung: **13.02.2013**
(21) Anmeldenummer: 05821673.0
(22) Anmeldetag: 17.12.2005
(51) Int. Cl.: G01N 27/24, A24C 5/34, G01N 27/22, G01R 27/26

(54) **MESSVORRICHTUNG UND -VERFAHREN ZUR ERKENNUNG VON FREMDKÖRPERN IN TABAK**
MEASURING DEVICE AND METHOD FOR RECOGNIZING FOREIGN BODIES IN TOBACCO
DISPOSITIF ET PROCEDE DE MESURE DESTINES A IDENTIFIER DES CORPS ETRANGERS DANS DU TABAC

(30) Priorität: 22.12.2004 DE 102004063229
(43) Veröffentlichungstag der Anmeldung: 26.09.2007
(73) Patentinhaber: Hauni Maschinenbau AG, 21033 Hamburg (DE)
(72) Erfinder: SCHRÖDER, Dierk, 22399 Hamburg (DE)
(74) Vertreter: Stork Bamberger
(86) Internationale Anmeldenummer: PCT/EP2005/013830
(87) Internationale Veröffentlichungsnummer: WO 2006/069720

(56) Entgegenhaltungen:
- EP-A- 0 924 513
- DE-A1- 19 651 355
- DE-C1- 10 037 180
- FR-A- 1 315 918
- GB-A- 717 127
- US-A- 3 979 581
- US-A- 3 996 942
- US-A- 4 114 090

## Beschreibung

Die Erfindung betrifft eine Meßvorrichtung zur Erkennung von Frerndkörpern in Tabak, nach dem Oberbegriff von Anspruch 1. Die Erfindung betrifft weiterhin ein entsprechendes Meßverfahren.

Zur Erkennung von Frerndkörpern in Tabak ist beispeielsweise aus den Dokumenten DE 100 37 180 C1, DE 101 00 664 A1, EP 1 327 876 B1, EP 1 330 961 A1 die Verwendung von Mikrowellen-Meßvorrichtungen bekannt. Aufgrund der erforderlichen hohen Meßgenauigkeit und der hohen verwendeten Frequenzen ist der schaltungstechnische Aufwand hoch.

Aus dem Dokument DE 10037180 ist ein weiteres Verfahren zum Delektieren und Selekticren von Freindkörpem in Zigaretten bekannt, bei dem der Tabak Mikrowellenstrahlung ausgesetzt wird, um sowohl die Dichte als auch die Feuchte des Tabaks zu messen und aus der Kombination beider Informationen auf das Vorhandensein von Freindkörpern zu erkennen.

Ferner zeigt die Schrift US 4114090 eine Einheit zur Bestimmung des Feuchtigkeitsgehaltes von Tabak, wobei das Material, dessen Feuchtigkeitsgehalt bestimmt werden soll, hierbei durch eine Kapazität geführt wird, die Teil eines RC-Netzwerkes ist.

Aus dem Dokument DE19651355 geht ein Gasblasendetekor hervor, mittels dessen der Anteil ungelöster Luft in durch Schläuchen oder Leitungen strömenden Flüssigkeiten der Medizintechnik erfasst werden soll.

Dokument EP 924 513 A1 zeigt eine Vorrichtung und ein Verfahren zur Ermittlung von Anteilen fester Stoffe in einem Prüfgut, indem das Prüfgut in einem Messkondensator einem elektrischen Wechselfeld ausgesetzt wird, so dass die dielektrischen Eigenschaften des Prüfguts durch messbare Werte wie Strom, Spannung und Phasenwinkel bestimmbar sind.

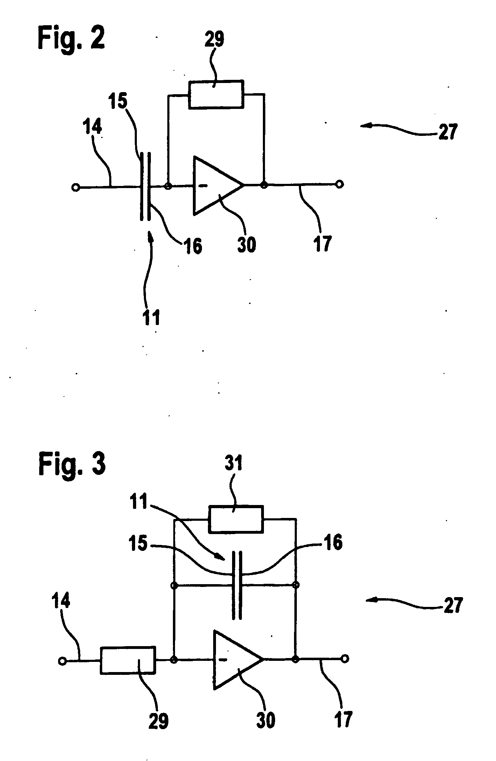

Die US3996942 offenbart eine Vorrichtung und ein Verfahren zur Bestimmung der Dichte entlang eines Zigarettenstrangs, der durch einem Messkondensator geführt wird. Der Messkondensator der Figur 2 besteht aus zwei röhrenformigen Elektroden, die beide geerdet sind, und einernicht geerdeten Rungslektrode zwichen den beiden geerdeten, röhren Förmigen Elektroden.

Die Aufgabe der vorliegenden Erfindung besteht darin, eine baulich einfache Meßvorrichtung zur Frerndkörperbestimmung mit hoher Meßgenauigkeit bereitzustellen.

Die Erfindung löst diese Aufgabe mit den Merkmalen der Ansprüche 1 und 20 Durch die Verwendung eines Kondensators, insbesondere anstelle eines Mikrowellenresonators, und eines Hochftequenzfeldes unterhalb des Mikrowellenbereichs kann der schaltungstechnische Aufwand Signifikant reduziert werden. Zudem kann unter Umständen mittels eines Kondensators ein homogeneres Feld in dem Produktraum erzeugt werden als mittels eines Mikrowellenresonators, bei dem die elektrische Feldstärke an der Umfangswand verschwindet.

Der Begriff "Freindkörper" bedeutet jedes andersartige Material, das in dem zu prüfenden Zweistoffsystem unerwüschterweise zusätzlich vorhanden ist. Das zu prüfende Zweistoffsystem wird insbesondere von Tabak und Feuchte (bzw. Soße), oder Filtermaterial und Triacetin. Die Erfindung unterscheidet sich dann von bekannten kapazitiven Meßvorrichtungen im Hochfrequenzbereich zur Erkennung von Masse oder Dichtefehlern beispielsweise in Tabak, die nur das Zweikomponentensystem von Produkt und Feuchte betreffen. Ein Fremdkörper beeinflußt aufgrund seiner abweichenden dielektrischen Eigenschaften in bestimmter Weise das Hochfrequenzfeld und daher die ermittelten Meßgrößen. Durch geeignete Auswertung in der Auswertecinrichtung kann aus den ermittelten Meßgrößen ein Fremdkörper in dem Produkt erkannt werden, insbesondere wenn der Verlauf einer Meßgröße eine von dem Fremdkörper hervorgerufene Abweichung zeigt.

Der Begriff "Hochfrequenz" bedeutet grundsätzlich, in Abgrenzung vom Mikrowellenbereich, Felder mit einer Frequenz unterhalb von 100 MHz, vorzugsweise unterhalb von 10 MHz. In der Regel beträgt die Frequenz mehr als 100 kHz. In einer bevorzugten Variante der Erfindung wird ein Hochfrequenzfeld mit einer Frequenz unterhalb von 5 MHz, vorzugsweise unterhalb von 1 MHz verwendet. Dies ist überraschend, da es bezüglich der Messung der Feuchte und/oder Dichte des Produkts bekannt ist, daß zur niedrigeren Frequenzen hin eine hinreichend genaue Messung nur in einem zunehmend einschränkten Meßbereich möglich ist, so daß für Tabak eine Meßfrequenz von mindestens 5 MHz als zweckmäßig gilt. Für die Bestimmung von Freindkörpern Tabak ergibt sich jedoch gerade bei niedrigeren Frequenzen eine größere Meßempfindlichkeit. Eine Erklärung hierfür besteht darin, daß bei niedrigeren Frequenzen die makroskopische Leitung einen zunehmenden Einfluß hat, wobei dies jedoch nicht für typische nicht-leitende Fremdkörper-Materialien (oder allgemeiner solche mit abweichender makroskopischer Leitfähugkeit) zutrifft, so daß der Unterschied in den Dielektrizitätskonstanten zwischen Produkt und Fremdkörper im erfindungsgemäßen Meßbereich größer ist als im Mikrowellenbereich.

Infolge der bevorzugten Verwendung einer laufenden Hochfrequenzwelle und einer im wesentlichen nicht-resonanten Schaltungscinrichtung, bei der also der Meßkondensator nicht frequenzbestimmender Teil eines Meß-Schwingkreises ist, kann auf die Verwendung einer gegenüber Temperatureinflüssen empfindlichen Schwingkreis-Spule verzichtet werden. "Im wesentlichen" bedeutet, daß resonante Feldkomponenten nicht ausgeschlossen sind, solange das Meßprinzip im wesentlichen auf einer fortschreitenden Welle beruht. Da keine Resonanzbedingung für einen Meßschwingkreis eingehalten werden muß, kann der Meßkondensator eine gegenüber dem Stand der Technik verringerte Kapazität von vorzugsweise weniger als 10 pF aufweisen, was den Aufwand und die Baugröße reduziert. Die geschilderte bevorzugte Ausführungsform unterscheidet sich daher von bekannten kapazitiven Meßvorrichtungen im Hochfrequenzbereich zur Erkennung von Masse- oder Dichtefehlern in Tabak, bei denen ein Meßkondensator und eine Spule als frequenzbestimmende Teile in einem Hochfrequenz-Schwingkreis geschaltet sind, wobei als Meßgrößen beispielsweise die von dem Produkt beeinflußte Resonanzfrequenz und Resonanzamplitude des Hochfrequenzfeldes bestimmt werden.

Vorzugsweise beruht die Fremdkörpererkennung darauf, daß zwei unabhängige Meßgrößen, insbesondere eine von der Kapazität des Meßkondensators abhängige Meßgröße und eine vom Verlustfaktor des Meßkondensators abhängige Meßgröße, in einem von dem erwarteten Verlauf abweichenden Verhältnis stehen. Vorzugsweise ist daher die Messung zweier unabhängiger Meßgrößen vorgesehen. Vorteilhafterweise werden dabei zwei von der Amplitude und der Phase der Hochfrequenzwelle abhängige Meßgrößen bestimmt. Grundsätzlich ist daher die Erzeugung einer Hochfrequenzwelle ausreichend, was den Aufwand gegenüber solchen Vorrichtungen reduziert, die auf der Verwendung mehrerer Hochfrequenzwellen unterschiedlicher Hochfrequenzen beruhen. Die Bestimmung zweier unabhängiger Meßgrößen ist aber nicht zwingend; es ist auch denkbar, eine Fremdkörpererkennung aus dem Verlauf lediglich einer Meßgröße vorzunehmen.

Der zur Bestimmung der Meßgrößen dienende Teil der Schaltungseinrichtung ist in der Regel der eigentlichen Meßschaltung, die den Meßkondensator umfaßt, nachgeschaltet. Während die Meßschaltung in der Regel einen Ausgang für das von dem Produkt beeinflußte Hochfrequenzfeld aufweist, weist die Meßgrößenbestimmungseinrichtung in der Regel eine der Zahl der zu bestimmenden Meßgrößen entsprechende Zahl von Ausgängen, vorzugsweise daher zwei Ausgänge auf. Es ist auch möglich, daß die Meßschaltung und die Meßgrößenbestimmungseinhchtung eine Einheit bilden. Die Meßgrößenbestimmungseinrichtung ist der eigentlichen Auswerteeinrichtung zur Fremdkörpererkennung durch Auswerten des Meßsignals vorgeschaltet. Es ist auch möglich, daß die Meßgrößenbestimmungseinrichtung und die Auswerteeinrichtung eine Einheit bilden. Bei einer bevorzugten Ausführungsform ist der zur Bestimmung der Meßgröße bzw. Meßgrößen dienende Teil der Schaltungseinrichtung digitalelektronisch ausgeführt. Dies ermöglicht die Verwendung einfacher Verfahren zur Bestimmung der gewünschten Meßgröße, beispielsweise des kapazitiven Anteils und/oder des Verlustanteils des Ausgangsspannungswertes der Meßschaltung. Ein besonders einfaches und daher bevorzugtes Verfahren beruht auf der Orthogonalität der Sinus- und Kosinusanteile und umfaßt die Messung einer diskreten Anzahl von n Meßwerten, beispielsweise Spannungswerten, über jede Schwingungsperiode des Hochfrequenzfeldes, separate Multiplikation der n Meßwerte mit entsprechenden Sinus- und Kosinus-Werten und separate Aufsummierung dieser Sinus- und Kosinus-Produkte. Die erhaltenen Summen stellen die Meßgrößen dar oder können zur Ermittlung der Meßgrößen weiterverarbeitet werden.

Eine besonders einfache Form einer Meßschaltung, d.h. den Meßkondensator umfassenden Teil der Schaltungseinrichtung, ist ein RC-Glied, vorzugsweise mit einem Operationsverstärker. Dabei handelt es sich vorzugsweise um ein RC-Differenzierglied, es kann aber beispielsweise auch ein RC-Integrierglied verwendet werden.

In einer bevorzugten Ausführungsform bestehen Teile des Sensors aus einem Material mit geringem Temperaturausdehnungskoeffizienten, um die Einflüsse von Temperaturschwankungen auf die Meßgenauigkeit möglichst gering zu halten. Zu dem gleichen Zweck kann der Sensor eine zusätzliche Einrichtung zur Konstanthaltung der Temperatur des Meßkondensators aufweisen. Auch eine zusätzliche Einrichtung zur Messung der Temperatur des Meßkondensators, beispielsweise ein Temperaturfühler, ist denkbar, um das Meßsignal entsprechend korrigieren zu können.

Vorzugsweise ist der Kondensator im wesentlichen senkrecht zu der Transportrichtung des Produkts angeordnet. Bei einem Plattenkondensator sind also die Kondensatorplatten senkrecht zu der Transportrichtung angeordnet. Dies ermöglicht es, die Elektroden in einem kurzen Abstand voneinander, beispielsweise unterhalb der Strangdicke des Produkts, anzuordnen. Hierdurch kann eine verbesserte Auflösung bezüglich der Fremdkörpererkennung in Längsrichtung, und damit eine Steigerung der Nachweisempfindlichkeit, erreicht werden.

Der Sensor ist zur Durchführung des Produkts durch den zwischen den Elektroden des Meßkondensators gebildete Raum eingerichtet, um eine möglichst vollständige und gleichmäßige Erfassung des Produkts zu ermöglichen.

Eine nicht von den Erfindung abgedechte Ausführungsform betrifft die Messung eines relativ breiten Produkts, beispielsweise einer Tabak- oder Tow-Bahn oder einem Baumwollvlies, oder einer Mehrzahl nebeneinander liegender Produktstränge. Dabei umfaßt der Sensor eine Mehrzahl von über die Bereite des Produkts angeordneten Meßkondensatoren. Diese Anordnung gestattet auf einfache Weise eine laterale Positionsbestimmung eines detektierten Fremdkörpers. Die mit der Hochfrequenzfeld-Erzeugungseirichtung verbundenen Elektroden sind auf gleichem Potential gehalten, beispielsweise einfach kurzgeschlossen, um das Übersprechen zwischen den Meßkondensatoren zu minimieren. Zum gleichen Zweck sind vorzugsweise auch die anderen Elektroden jeweils mittels invertierender Operationsverstärker virtuell auf dem gleichem Potential gehalten.

Weitere vorteilhafte Merkmale gehen aus den Unteronsprüchen und der folgenden Beschreibung vorteilhafter Ausführungsbeispiele unter Bezugnahme auf die beigefügten Zeichnungen hervor. Es zeigen:
- Fig. 1:: eine schematische Schaltung einer im wesentlichen analogen Meßvorrichtung;
- Fig. 2:: eine Differenzier-Meßschaltung für eine Meßvorrichtung;
- Fig. 3:: eine Integrier-Meßschaltung für eine Meßvorrichtung;
- Fig. 4:: eine Längssehnitsansicht eines kapazitiven Sensors;
- Fig. 5:: eine Querschnitsansicht eines kapazitiven Sensors in einer Ausführungsform, die nicht von der vorliegenden Erfindung abgedecht ist;
- Fig. 6:: eine schematische Schaltung einer im wesentlichen digitalen Meßvorrichtung;
- Fig. 7:: eine schematische Schaltung eine nicht von der Erfindung abgedeckten Meßvorrichtung für die Messung an einem breiten Produkt; und
- Fig. 8:: einen Operationsverstärker für eine Differenzier-Meßschaltung für die Meßvorrichtung aus Fig. 7.

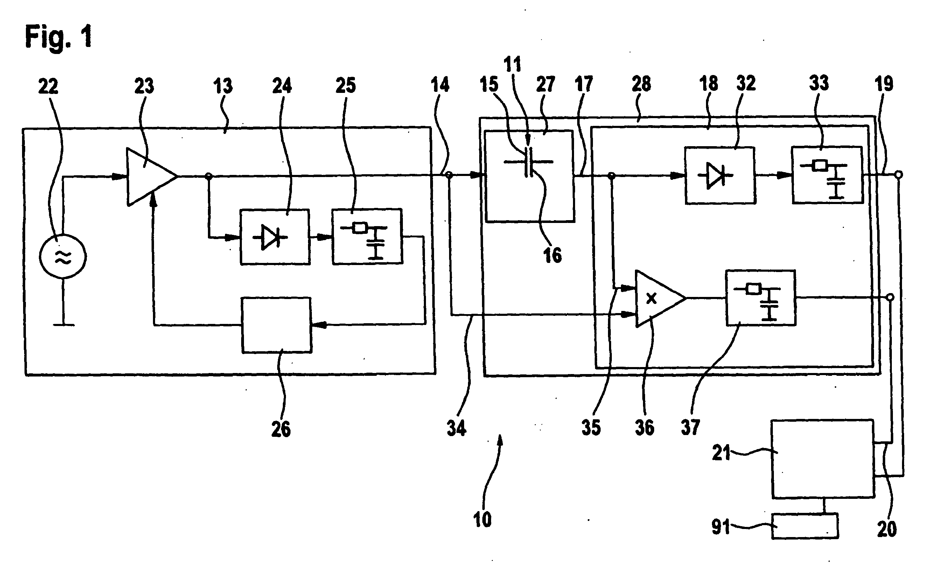

Die kapazitive Meßvorrichtung 10 gemäß den Fig. 1 bis 6 umfaßt eine Hochfrequenzerzeugungseinrichtung 13 zur Erzeugung einer Hochfrequenzwelle, die über eine Eingangsleitung 14 an eine Schaltungseinrichtung 28 gespeist wird. Die Schaltungseinrichtung 28 umfaßt einen Meßkondensator 11, durch den das zu messende, im vorliegenden Fall strangförmige Tabak 12 geführt wird. Die von der Hochfrequenzerzungungsein richtung 13 erzeugte Hochfrequenzwelle wird an eine Elektrode 15 des Meßkondensators 11 geleitet, um darin ein Hochfrequenzfeld zu erzeugern, das mit dem Tabak 12 in Wechselwirkung steht. Die von der anderen Elektrode 16 des Meßkondensators 11 auslaufende, von dem Tabak 12 beeinflußte Hochfrequenzwelle wird mittels der Schaltungseinrichtung 28 verarbeitet, um mindestens eine, vorzugsweise zwei voneinander unabhängige, von der Amplitude und/oder der Phase der von dem Tabak 12 beeinflußten Hochfrequenzwelle abhängige Meßgrößen zu bestimmen. Dabei handelt es sich vorzugsweise um zwei von der Kapazität und dem Verlustfaktor des Meßkondensators 11 abhängige Meßgrößen. Den Meßgrößen entsprechende Meßsignale werden an die Auswerteeinrichtung 21, beispielsweise einen entsprechend programmierten Computer, geleitet.

In dem Tabak 12 kann ein unerwünschter Fremdkörper 90 auftreten, beispielsweise ein Kunststoff- oder Metallpartikel. Aufgrund abweichender dielektrischer Eigenschaften beeinflußt der Fremdkörper 90 in bestimmter Weise die Amplitude und Phase der Hochfrequenzwelle und hierdurch auch die ermittelten Meßgrößen. Durch geeignete Auswertung in der Auswerteeinrichtung 21 kann aus den ermittelten Meßgrößen ein Fremdkörper 90 in dem Produkt 12 nachgewiesen werden, insbesondere wenn der erlauf einer Meßgröße eine von dem Fremdkörper 90 hervorgerufene Abweichung zeigt. Beispielsweise können von einem Fremdkörper 90 Ausschläge (spikes) in einer Meßkurve hervorgerufen werden; die Auswerteeinrichtung ist dann zweckmäßigerweise zur Erkennung derartiger Ausschläge in der Meßkurve eingerichtet. Bewährt für die Fremdkörpererkennung ist die Auswertung des Verhältnisses zweier voneinander unabhängiger Meßgrößen. Die Auswerteeinrichtung 21 kann gegebenenfalls ein Entfernungsmittel 91, beispielsweise eine Blasdüse, zur Entfernung eines Teils des Tabaks 12, in dem ein Fremdkörper 90 detektiert wird, steuern.

Die Ausführungsform gemäß Fig. 1 betrifft eine im wesentlichen analoge Meßvorrichtung. Die Hochfrequenzerzeugungseinrichtung 13 umfaßt einen harmonischen Oszillator 22 zur Erzeugung einer Hochfrequenzelle. Die Spannungsamplitude U_{c} der erzeugten Hochfrequenzwelle wird vorzugsweise mittels einer Regeleinrichtung 23-26 konstant gehalten, um eine von Schwankungen der Eingengsamplitude unbeeinflüßte Messung zu ermöglichen. Zu diesem Zweck wird die von dem harmonischen Oszillator 22 -, erzeugte Hochfrequenzwelle in einen steuerbaren Verstärker 23 gespeist. Das Ausgangssignal des Verstärkers 23 wird in einen Gleichrichter 24 gespeist, dessen Ausgangssignal über das Tiefpaßfilter 25 an einen Regler 26 weitergeleitet wird. Der Regler 26 steuert den Verstärker 23 in der Weise, daß die Amplitude U_{c} der harmonischen Schwingung am Ausgang des Verstärkers 23 einen konstanten Wert aufweist.

Die Meßschaltung 27 ist der unmittelbar mit dan Meßkondensator 11 geschaltete Teil der Schaltungseinrichtung 28. Geeignet ist hierbei jede Meßschaltung, die zur Erzeugung einer hinreichenden Amptituden- und Phasenveränderung der Hochfrequenzwelle infolge des durch den Meßkondensator 11 laufenden Produkts 12 eingerichtet ist. Zwei bevorzugte Ausführungsformen der Meßschaltung 27 sind in den Fig. 2 und 3 gezeigt, wobei der Meßkondensator 11, ein Widerstand 29 und ein invertierender Operationsverstärker 30 in einer Differenzieranordnung gemäß Fig. 2 bzw. einer Integrieranordnung gemäß Fig. 3 geschaltet sind. Der nichtinvertierende Eingang des Operationsverstärkers 30 ist zweckmäßigerweise auf Masse gelegt. Bei der Integrieranordnung gemäß Fig. 3 ist ein zusätzlicher Widerstand 31 vorgegehen, um gegebenenfalls zu verhindern, daß das Ausgangssignal in die Begrenzung läuft. Das der auslaufenden Hochfrequenzwelle entsprechende Ausgangssignal der Meßschaltung 27 erfährt aufgrund der Wechselwirkung mit dem Tabak 12 eine gegenüber der Eingangsamplitude Uₐ geänderte Spanaungsamplitude Uₐ sowie eine Phasenverschiebung von δ gegenüber dem Eingangssignal.

Die durch den Meßkondensator 11 laufende Hochfrequenzwelle wird über die Ausgangsleitung 17 der Meßschaltung 27 an die Meßgrößenbestimmungseinrichtung 18 geleitet. Die Meßgrößenbestimmungseinrichtung 18 bestimmt aus dem Hochfrequenzsignal geeignete Meßgrößen. Hierzu wird in der Ausfühnungsform gemäß Fig. 1 das Ausgangssignal der Meßschaltung 27 einem Gleichrichter 32 zugeführt und in einem Tiefpaßfilter 33 geglättet. Das somit erhaltene Signal ist proportional zur Ausgangsamplitude Uₐ. Der Meßgrößenbestimmungseinrichtung 18 wird weiterhin das von der Hochfrequenzereugungseinrichtung 13 erzeugte Eingangssignal über die Leitung 34 zugeführt. Im allgemeinen wird zweckmäßigerweise ein von der erzeugten Hochfrequenzwelle abhängiges Signal über eine zusätzlich zu der Meßleitung über den Meßkondensator 11 vorgesehene Leitung 34, 234 an die Schaltungseinrichtung 28 geleitet, um die Phaseninformation des Eingangssignals für die Bestimmung der Phasenverschiebung des Ausgangssignals nutzen zu können. Im vorliegenden Fall wird das Eingangssignal des Meßkondensators 11 über die Leitung 34 und das Ausgangssignal des Meßkondensators 11 bzw. der Meßschaltung 27 über eine Leitung 35 an den Multiplikationsverstörker 36 geleitet, darin miteinander multipliziert und mittels eines Tiefpaßfilters 37 geglättet. Das somit erhaltene Signal ist proportional zur Ausgangsamplitude Uₐ mal dem Sinus (oder Kosinus) der Phasenverschiebung δ. Aus dem Verlauf der mittels der Meßgrößenbestimmungseinrichtung 18 bestimmten Meßgrößen, insbesondere aus einem entsprechend gebildeten Verhältnis, und Vergleich mit einem zu erwartenden Verlauf, lassen sich bei Feststellung einer Abweichung etwaige in dem Produkt 12 enthaltene Fremdkörper 90 nachweisen. Zur entsprechenden Auswertung werden die Meßsignale über die Ausgangsleitungen 19, 20 an die Auswerteeinrichtung 21 geleitet, in der die Auswertung beispielsweise mittels eines darin gespeicherten Computerprogramms durchgeführt wird.

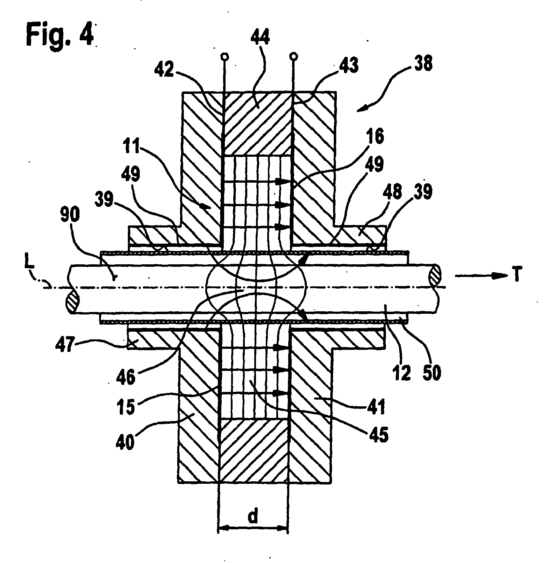

Eine bevorzugte Ausführungsform eines Hochfrequenzsensors 38 ist in Fig. 4 gezeigt. Der Sensor 38 ist im wesentlichen rotationssymmetrisch um die Längsachse L aufgebaut. Durch eine mittige Längsbohrung 39 des Sensors 38 wird in Transportrichtung T, die mit der Längsrichtung L zusammenfällt, der Tabakstrang geführt. Der Sensor umfaßt zwei rotationssymmetrische, scheibenförmige, senkrecht zur Längsrichtung L orientierte Grundkörper 40, 41, die mittels eines äußeren, ringförmigen, nichtleitenden Begrenzungskörpers 44 voneinander beabstandet sind und die jeweils eine zentrale Durchgangsbohrung 39 für den Tabakstrang nufweisen. An den senkrecht zur Längsrichtung L orientierten Innenflächen der Grundkörper 40, 41 ist jeweils eine Elektrode 15, 16 des Meßkondensators 11 in Form einer metallischen Oberfläche, etwa einer metallischen Beschichtung, beispielsweise durch Goldbedampfung, aufgebracht. Der Meßkondensator 11 ist daher als Plattenkondensator mit plattenförmigen Elektroden 15, 16 ausgeführt, die kreisscheibenförmig und senkrecht zur Längsrichtung L orientiert sind und eine zentrale Durchgangsülffnung für den Tabakstrang 12 aufweisen. In dieser Anordnung verlaufen die Feldlinien im wesentlichen parallel zur Transportrichtung. Zwischen den Grundkörpern 40, 41 ist ein felderfüllter Raum 45 gebildet, der von dem Begrenzungskörper 44 radial nach außen abgeschlossen wird. Das Hochfrequenzfeld erstreckt sich in den zentralen Produktraum 46 hinein und befindet sich dort mit dem Tabak 12 in Wechselwirkung. Die Platten 15, 16 weisen einen geringeren Radius auf als die Grundkörper 40, 41, um eine Austritt des Hochfrequenzfeldes in die Umgebung des Sensors zu verhindern. Die Platten 15, 16 des Plattenkondensators 11 können in einem geringen Abstand d voneinander angeordnet sein, um die Meßauflösung in Längsrichtung L zu verbessern. Der Abstand d kann insbesondere geringer sein als der Durchmesser des Tabaktstrangs 12 und beispielsweise weniger als 8 mm, vorzugsweise weniger als 4 mm betragen. Es sind weiterhin leitende Verbindungen 42, 43 der Elektroden 15, 16 mit externen elektrischen Anschlüssen vorgesehen. Die Grundkörper 40, 41 weisen jeweils einen röhrenförmigen, sich axial nach außen erstreckenden, den Tabakstrang umfassenden Fortsatz 47, 48 auf. Die Fortsätze 47, 48 weisen eine innenwandige metallische Oberfläche bzw. Beschichtung 49 auf, dic zweckmäßigerweise mit den Elektroden 15, 16 verbunden ist. Die metallische Beschichtung 49 bildet einen metallischen Kamin, um ein Herauslecken des Feldes aus den Produktdurchführungsöffnungen des Kondensators 11 zu verbindern. Weiterhin ist eine den Tabakstrang 12 unmittelbar umgebende und diesen führende, sich über die gesamte Länge des Sensors erstreckende Röhre 50 aus nichtleitendem Material vorgesehen, die eine Verunreinigung des Sensorinneren durch Produktreste verhindert. In einer weiteren Ausführungsform kann der zwischen den Elektroden 15, 16 gebildete felderfüllte Raum 45 zur positiven Beeinflussung des Feldverlaufs teilweise oder vollständig, abgesehen von dem Produktraum, mit einem dielektrischen Material gefüllt sein.

Die Körper 40, 41, 44 des Sensors 38 bestehen vorzugsweise aus einem nichtleitenden Material mit sehr geriugem Temperaturausdehnungskoeffizienten, beispielsweise Zerodur, um eine erhöhte Formstabilität des Sensors 38 gegen Temperatureinflüsse zu erreichen. Aufgrund der verringerten Abhängigkeit der Kapazitätseigenschaften des Meßkondensators 11 von der Umgebungstemperatur kann eine verbesserte Meßgenauigkeit erreicht werden. Zu dem selben Zweck ist vorzugsweise eine nicht gezeigte Regeleinrichtung zur Konstanthaltung der Sensortemperatur vorgeschen. Es ist auch denkbar, daß die Grundkörper 40, 41 des Sensors 38 vollständig oder teilweise aus Metall bestehen.

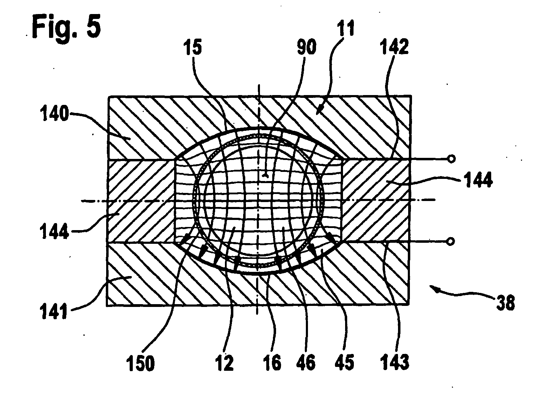

Eine nicht von der Erfindung abgedeakte Ausführungstom eines Sensors 38 ist in Fig. 5 gezeigt, wobei einander entsprechende Teile durch entsprechende 100er-Bezugsziffern bezeichnet sind. Die Elektroden 15, 16 werden von Platten gebildet, die parallel zu der senkrecht zur Papierebene orientierten Transportrichtung angeordnet sind. Die Feldlinien verlaufen in diesem Beispiel im wesentlichen senkrecht zu der Transportrichtung. Die Platten 15, 16 sind vorzugsweise um den Produktstrang 12 herum angeordnet und zu diesem Zweck vorzugsweise gewölbt geformt.

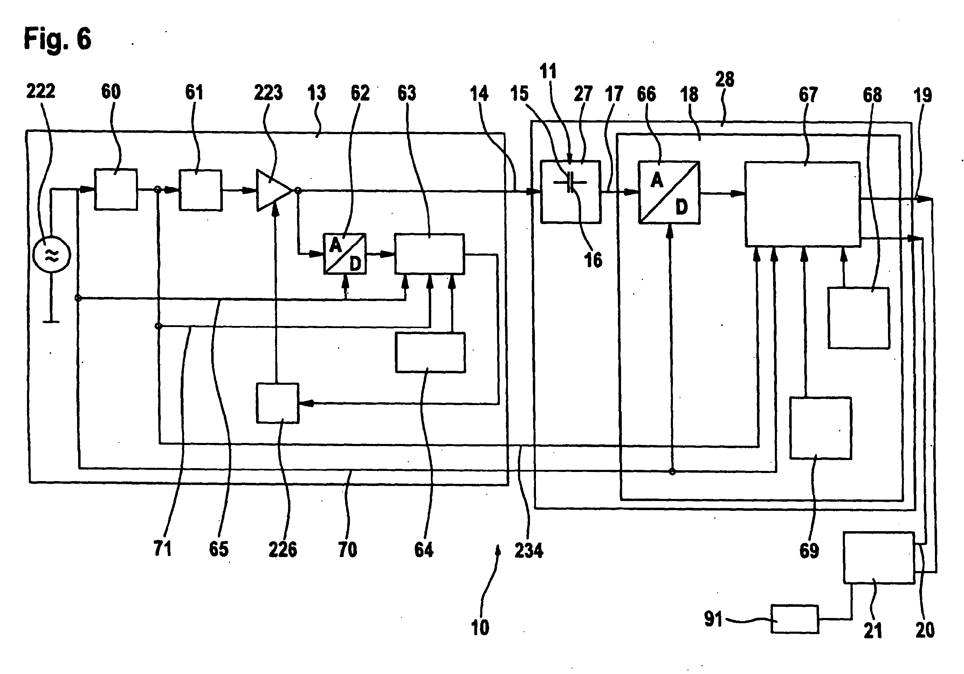

Eine bevorzugte Ausführungsform einer Meßvorrichtung 10 ist in Fig. 6 gezeigt, wobei einander entsprechende Teile durch entsprechende 200er-Bezugsziffern bezeichnet sind. Im Gegensatz zu der Ausführungsform gemäß Fig. 1. ist insbesondere die Meßgrößenbestimmungseinrichtung 18 digitalelektronisch ausgeführt. Zu diesem Zweck weist die Meßgrößenbestimmungseinrichtung 18 einen A/D-Wandler 66 auf, zu dem das von der Meßschaltung 27 ausgegebene Meßsignal geleitet wird. Der A/D-Wandler 66 ist mit einer Abtastfrequenz gelaktet, die um einen Faktor n höher ist als die Frequenz der Hochfrequenzwelle, wobei n eine natürliche Zahl größer 1 ist. Das Taktsignal für den A/D-Wandler 66 wird mittels des Quarzoszillators 222 in Form eines Rechteckschwingungssignals mit einer Frequenz von beispielsweise 50 MH₂ erzeugt, so daß im vorliegenden Beispiel n = 10 ist. Im allgemeinen besitzt daher die Meßvorrichtung 10 eine Einrichtung 222 zur Erzeugung eines Abtastsignals mit einer Abtastfrequenz, die um einen Faktor n höher ist als die Frequenz der Hochfrequenzwelle. Das Abtastsignal wird über die Leitung 70 an den A/D-Wandler 66 geleitet.

Die mittels des A/D-Wandlers 66 abgetasteten Meßwerte werden an die digitale Verarbeitungseinrichtung 67 geleitet, die zur Ermittlung geeigneter, voneinander unabhängiger Meßgrößen programmiert ist. Bei einem bevorzugten Meßgrößenermittlungsverfahren wird jeder abgetastete Meßwert einerseits mit dem entsprechenden Wert der Sinusfunktion und andererseits mit dem entsprechenden Wert der Kosinusfunktion multipliziert. Zu diesem Zweck wird das Abtastsignal über die Leitung 70 an die Verarbeitungseinrichtung 67 geleitet. Die Sinus- und Kosinuswerte können beispielsweise aus entsprechenden tabellarischen Speichern 68, 69 entnommen werden. Die auf diese Weise erhaltenen n Sinuswerte und n Kosinuswerte werden dann getrennt über eine Periode des Hochfrequenzfeldes aufsummiert, so daß zwei Summen erhalten werden. Zu diesem Zweck wird das Hochfrequenzeingangssignal über die Leitung 234 an die Verarbeitungseinrichtung 67 geleitet, so daß diese phasengleich mit der Hochfrequenzerzeugungseinrichtung 13 arbeitet. Aus den erhaltenen Summen lassen sich aufgrund bestimmter Orthogonalitätsbeziehungen die zwei gewünschten, von der Amplitude und der Phase des von dem Produkt 12 beeinflußten Meßsignals abhängige Meßgrößen eindeutig ermitteln. Zur entsprechenden Auswertung werden die Meßsignale über die Ausgangsleitungen 19, 20 an die Auswerteeinrichtung 21 geleitet, in der die Auswertung beispielsweise mittels eines darin gespeicherten Computerprogramms durchgerührt wird.

Zweckmäßigerweise kann das von der Hochfrequenzquelle 222 erzeugte Signal ebenfalls zur Erzeugung der für die Messung verwendeten Hochfrequenzwelle verwendet werden. Zu diesem Zweck wird das von der Hochfrequenzquelle 222 erzeugte Signal mittels der Teilerstufe 60 um den Faktor n auf eine phasensynchrone Rechteckschwingung mit der Meßfrequenz von im vorliegenden Fall 5 MHz heruntergeteilt und anschließend mittels der PLL-Schaltung 61 in ein phasensynchrones sinusförmiges Signal mit der gleichen Frequenz umgewandelt.

Auch die Regeleinrichtung 223, 62-64, 226 zur Konstanthaltung der Spannungsamplitude Uₑ der von dem Verstärker 223 ausgegebenen Hochfrequenzwelle kann digitalelektronisch ausgeführt sein. In diesem Fall wird das Ausgangssignal des Verstärkers 223 in einen A/D-Wandler 62 gespeist, der über eine Leitung 65 mit dem Abtastsignal von 50 MHz angesteuert wird, wodurch pro Periode n Abtastwerte des von dem Verstärker 223 ausgegebenen Signals erzeugt werden. Die mittels des A/D-Wandlers 62 abgetasteten Meßwerte werden an die digitale Verarbeitungseinrichtung 63 geleitet. Bei einem bevorzugten Verfahren wird jeder abgetastete Spannungswert mit dem entsprechenden Wert der Kosinusfunktion multipliziert. Zu diesem Zweck wird das Abtastsignal über die Leitung 65 an die Verarbeitungseinrichtung 63 geleitet. Die Kosinuswerte können beispielsweise aus einem entsprechenden tabellarischen Speicher 64 entnommen werden. Die auf diese Weise erhaltenen n Kosinuswerte werden dann über eine Periode des Hochfrequenzfeldes aufsummiert. Zu diesem Zweck wird das Hochfrequenzeingangssignal über eine Leitung 71 an die Verarbeitungseinrichtung 63 geleitet, so daß diese phasengleich mit der Hochfrequenzerzeugungseinrichtung 13 arbeitet. Das Ausgangssignal der Verarbeitungseinrichtung 63 wird an den Regler 226 weitergeleitet, der den Verstärker 223 in der Weise steuert, daß das Ausgangssignal der Verarbeitungseinrichtung 63 und damit die Amplitude U_{c} der Schwingung am Ausgang des Verstärkers 223 einen konstanten Wert aufweist.

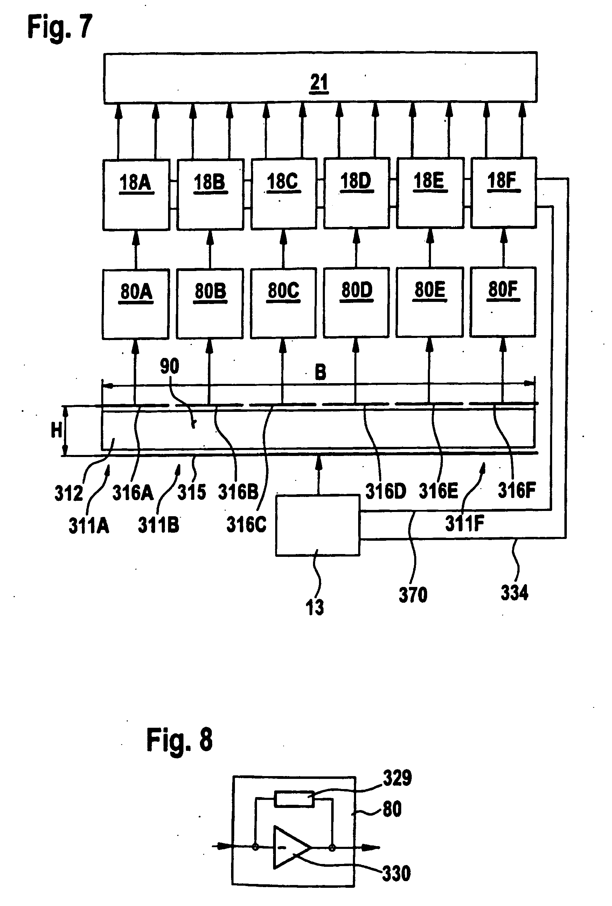

Die von der Erfindung nicht abgedechte Ausführungsform gemäß Fig. 7 dient insbesondere zur Messung an einem breiten, bahnförmigen Produkt 312, beispielsweise einer Tabakbahn, einer Tow-Bahn oder einem Baumwollvlies, dessen Breite B wesentlich größer ist, beispielsweise mindestens um einen Faktor 3, als seine Höhe H. Eine andere Anwendung betrifft die Messung an einer Mehrzahl nebeneinander liegender Produktstränge, beispielsweise Tabakstränge. In Fig. 7 verläuft die Transportrichtung senkrecht zur Papierebene. Einander entsprechende Teile sind durch entsprechende 300er-Bezugsziffem bezeichnet. Bei dieser Ausführungsform wird eine Mehrzahl von Meßkondensatoren 311A, 311B, ... verwendet, hier beispielsweise sechs, die über die Breite des Produkts angeordnet sind. Diese Anordnung ermöglicht eine Bestimmung der lateralen Position eines Fremdkörpers, oder, bei einer Mehrzahl nebeneinander liegender Produktstränge, den den Fremdkörper cnthaltenden Produktstrang. Die Meßkondensatoren 311A, 311B, ... werden zweckmäßigerweise von derselben Hochfrequenzergungseinrichtung 13 gespeist. Vorzugsweise sind sämtliche Eingangselektroden 315 der Meßkondensatoren 311A, 311B, ... auf gleiches Potential gelegt, am einfachsten durch Kurzschließen der Elektroden, wie in Fig. 7 gezeigt. Hierdurch wird das Übersprechen zwischen den Meßkondensatoren 311A, 311B, ... minimiert. Die Ausgangselektrode 316A, 316B, ... jedes Meßkondensators 311A, 311B, ... ist jeweils mit einer Meßschaltung 80A, 80B, ... verbunden. Die Meßschaltung 80A, 80B, ... ist vorzugsweise wie in Fig. 8 gezeigt ausgeführt und, bildet dann gemeinsam mit dem jeweiligen Meßkondensator 311A, 311B, ... eine Differenzier-Meßschaltung 27 wie in Fig. 2 gezeigt. Die Verwendung jeweils eines dem Meßkondensator 311A, 311B, ... nachgeschalteten invertierenden Operationsverstärkers 330 ist in diesem Ausführungsbeispiel besonders vorteilhaft, da hierdurch die Ausgangselektroden 316A, 316B, ... sämtlicher Meßkondensatoren 311A, 311B, ... virtuell auf das gleiche Potential, insbesondere Masse gelegt werden. Hierdurch wird das Übersprechen zwischen den Meßkondensatoren 311A, 311B, ... minimiert. Der Ausgang jeder Meßschaltung 80A, 80B, ... ist zweckmäßigerweise jeweils mit einer Meßgrößenbestimmungseiririchtung 18A, 18B, ... verbunden, die insbesondere digitalelektronisch, beispielsweise wie in Fig. 6 gezeigt, ausgeführt sein können. Die Meßgrößenbestimmungseinrichtungen 18A, 18B, ... sind zweckmäßigerweise mit der Auswerteeinrichtung 21 zur Fremdkörpererkennung verbunden. Die entsprechenden Verfahren zur Bestimmung der Meßgrößen und zur Fremdkörpererkennung werden vorzugsweise wie zuvor beschrieben durchgeführt.

## Patentansprüche

1. Meßvorrichtung (10) zur Erkennung von Fremdkörpern (90) in Tabak (12) mit einer Meßeinrichtung (11), einer Einrichtung (13) zur Erzeugung eines elektromagnetischen Wechselfeldes in der Meßeinrichtung (11), das durch den Tabak (12), der in einem Meßvolumen (46) der Meßvorrichtung (10) angeordnet ist, beeinflußt wird, einer die Meßeinrichtung (11) umfassenden Schaltungseinrichtung (28), die zur Bestimmung mindestens einer geeigneten Meßgrößen des von dem Tabak (12) beeinflußten Wechselfeldes eingerichtet ist, und einer Auswerteeinrichtung (21), die zur Erkennung des Fremdkörpers (90) durch geeignete Auswertung der mittels der Schaltungseinrichtung (28) bestimmten Meßgröße eingerichtet ist, wobei die Meßeinrichtung (11) ein Meßkondensator ist der als Plattenkondensator mit plattenförmigen Elektroden (15, 16) ausgeführt ist, wobei die Frequenz des Wechselfeldes im Hochfrequenzbereich mehr als 100 kHz beträgt und unterhalb von 100 MHz liegt,
**dadurch gekennzeichnet, dass**
der den Meßkondensator (11) umfassende Sensor (38) zur Durchführung des Tabaks (12) durch den zwischen den platten Förmigen Elektrogen (15, 16) des Meßkondensators (11) gebildeten Raum eingerichtet ist, wobei
die plattenförmigen Elektroden (15,16) des Meßkondensators (11) im wesentlichen senkrecht zu einer axialen Transportrichtung des Tabaks (12) angeordnet sind und wobei
die Elektroden (15, 16) des Meßkondensators (11) jeweils eine zentrale Tabak durchführungsöffnung aufweisen sowie
an jeden platten förmigen Elektrode (15, 16) eine röhrenförmige, sich vom zwiscken den plalten förmigen Elektroden gebildeten kown axial nach außen erstreckende, den Tabak (12) umfassende leitende Oberfläche (49) vorgesehen ist, wobei die lütaude oberfläche (49) einen metallischen kamin bildet.

2. Messvorrichung nach Anspruch 1, **dadurch gekennzeichnet, dass** der Sensor (38) zwei rotationssymmetrische, scheibenförmige senkrecht zur Transportrichtung orientierte Grundkörper (40, 41) umfasst, die mittels eines äußeren, ringförmigen, nichtleitenden Begrenzungskörpers (44) voneinander beabstandet sind, derart, dass der zwischen den Grundkörpern (40, 41) gebildete felderfüllte Raum (45) von dem Begrenzungskörper (44) radial nach außen abgeschlossen wird.

3. Meßvorrichtung nach Anspruch 1 oder 2, dadurch gekennzeichet, daß die Schaltungseinrichtung (28) bei der verwendeten Meßfrequenz des Wechselfeldes im wesentlichen nicht-resonant ausgebildet ist und die Messung auf der Ausbreitung einer laufenden Hochfrequenzwelle in dem Meßkondensator (11 ) beruht.

4. Meßvorrichtung nach Anspruch 3, **dadurch gekennzeichnet, daß** die Schaltungseinrichtung (28) zur Bestimmung mindestens einer, vorzugsweise zweier voneinander unabhängiger, von der Amplitude und/oder der Phasenverschiebung der von dem Produkt (12) beeinflußten Hochfrequenzwelle abhängigen Meßgröße eingerichtet ist.

5. Meßvorrichtung nach Anspruch 3 oder 4, **dadurch gekennzeichnet, daß** die Hochfrequenzfeld-Erzeugungseinrichtung (13) eine Regeleinrichtung (23-26; 223, 62-64, 226) zur Konstanthaltung der Amplitude der erzeugten Hochfrequenzwelle aufweist.

6. Meßvorrichtung nach einem der Ansprüche 1 bis 5, **dadurch gekennzeichnet, daß** ein zur Bestimmung der mindestens einen Meßgröße dienender Teil (18) der Schaltungseinrichtung (28) digitalelektronisch ausgeführt ist.

7. Meßvorrichtung nach Anspruch 6, dadurch gekenntzeichnet, daß die Meßgrößenbestimmungseinrichtung (18) zum Abtasten des Meßsignals mit einer Ablastfrequenz, die um einen Faktor n höher ist als die Frequenz des Hochfrequenzfeldes, eingerichtet ist.

8. Meßvorriehtung nach Anspruch 7, **dadurch gekennzeichnet, daß** die Meßgrößenbestimmungseinrichtung (18) eine digitale Verarbeitungseinrichtung (67) zum separaten Multiplizieren von n abgetasteten Meßwerten mit entsprechenden Sinus- und Kosinus-Werten und zum separaten Aufsummieren dieser Sinus- und Kosinus-Produkte aufweist.

9. Meßvorrichtung nach einem der Ansprüche 1 bis 8, dadurch gekenntzeichnet, daß der den Meßkondcnsator (11) umfassende Sensor (38) mindestens teilweise aus einem Material mit geringem Temperaturausdehnungskoeffizienten besteht.

10. Meßvorrichtung nach einem der Ansprüche 1 bis 9, **dadurch gekennzeichnet, daß** der den Meßkondensator (11) umfassende Sensor (38) eine Einrichtung zur Konstanthaltung der Temperatur des Meßkondensator (11) aufweist.

11. Mcßvorrichtung nach einem der Ansprüche 1 bis 10, **dadurch gekennzeichnet, daß** die Elektroden (15, 16) des Meßkondensators (11) von einer metallischen Beschichtung gebildet werden.

12. Meßvorrichtung nach einem der Ansprüche 1 bis 11, **dadurch gekennzeichnet, daß** der den Meßkondensator (11) umfassende Sensor (38) ein nicht-leitendes Teil (44; 144) zur Begrenzung des felderfüllten Raums (45) des Meßkondensator (11) aufweist.

13. Meßvorrichtung nach einem der Ansprüche 1 bis 12, **dadurch gekennzeichnet, daß** ein den Meßkondensator (11) umfassender Sensor (38) eine den Tabak (12) unmittelbar umgebende nicht-leitende Röhre (50, 150) aufweist.

14. Meßvorrichtung nach einem der Ansprüche 1 bis 13, **dadurch gekennzeichnet, daß** der zwischen den Elektroden (15, 16) des Meßkondensator (11) gebildete felderfüllte Raum (45) teilweise oder vollständig mit einem dielektrischen , Material gefüllt ist.

15. Meßvorrichtung nach einem der Ansprüche 1 bis 14, **dadurch gekennzeichnet, daß** die Schaltungscinrichtung (28) zur Bestimmung einer von der Kapazität des Meßkondensators (11) abhängigen Meßgröße eingerichtet ist.

16. Meßvorrichtung nach einem der Ansprüche 1 bis 15, **dadurch gekennzeichnet, daß** die Schaltungseinrichtung (28) zur Bestimmung einer vom Verlustfaktor des Meßkondensators (11) abhängigen Meßgröße eingerichtet ist.

17. Meßvorrichtung nach einem der Ansprüche 1 bis 16, **dadurch gekennzeichnet, daß** der Meßkondensator (11) Teil eines RC-Gliedes (11, 29), vorzugsweise eines RC-Differenziergliedes ist.

18. Meßvorrichtung nach einem der Ansprüche 1 bis 17, **dadurch gekennzeichnet, daß** die Schaltungseinrichtung (28) einen Operationsverstärker (30), vorzugsweise einen invertierenden Operationsverstärker umfaßt.

19. Meßvorrichtung nach einem der Ansprüche 1 bis 18, **dadurch gekennzeichnet, daß** die Kapazität des Meßkondensators (11) weniger als 10 pF beträgt.

20. Meßverfahren zur Erkennung von Fremdkörpern in Tabak mit einer Meßeinrichtung, in der ein elektromagnetisches Wechselfeld erzeugt wird, das durch einen in dem tabak enthaltenen Fremdkörper beeinflußt wird, wobei mindestens eine geeignete Meßgröße des von dem Fremdkörper beeinflußten Wechselfeldes bestimmt wird und die bestimmte Meßgröße zur Erkennung des Fremdkörpers ausgewertet wird, wobei als Meßeinrichtung ein Meßkondensator verwendet wird, der als Plattenkondensator mit plattenförmigen Elektroden (15, 16) ausgeführt ist, und wobei ein Wechselfeld
mit einer Frequenz größer als 100 kHz und unterhalb von 100 MHz verwendet wird,
**dadurch gekennzeichnet, dass**
der den Meßkondensator (11) umfassende Sensor (38) zur Durchführung des Tabaks (12) durch den zwischen den plalten förmigen Elektroden (15, 16 des Meßkondensators (11) gebildeten Raum eingerichtet ist, wobei
die plalten förmigden Electroden (15,16) des Meßkondensators (11) im wesentlichen senkrecht zu einer axialen Transportrichtung des Tabaks (12) angeordnet sind und wobei
die Elektroden (15, 16) des Meßkondensators (11) jeweils eine zentrale Tabak durchführungsöffnung aufweisen sowie
an jeden platten förmigen Elecktrode (15, 16) eine röhrenförmige, sich vom zwischen den platten förmigen Electroden gebildeten Room axial nach außen erstreckende, den Tabak (12) umfassende leitende (49) Oberfläche vorgesehen ist, wobei die leitench Obesfläch (49) einen metallischen Kamin bilchet.

21. Meßverfahren nach Anspruch 20, **dadurch gekennzeichnet, daß** die Messung nichtresonant mittels einer laufenden Hochfrequenzwelle durchgerührt wird.

22. Meßverfahren nach Anspruch 21, **dadurch gekennzeichnet, daß** mindestens eine von der Amplitude und/oder der Phasenverschiebung der von dem Fremdkörper beeinflußten Hochfrequenzwelle abhängige Meßgröße bestimmt wird.

23. Meßverfahren nach Anspruch 21 oder 22, **dadurch gekennzeichnet, daß** das Meßsignal mit einer Abtastfrequenz, die um einen Faktor n höher ist als die Frequenz der Hochfrequenzwelle, abgetastet wird.

24. Meßverfahren nach Anspruch 23, **dadurch gekennzeichnet, daß** jeweils n abgetastete Meßwerte mit entsprechenden Sinus- und Kosinus-Werten separat multipliziert werden und diese Sinus- und Kosinus-Produkte separat aufsummiert werden.

## Claims

1. Measuring apparatus (10) for the detection of foreign bodies (90) in tobacco (12), having a measuring device (11), a device (13) for generating an alternating electromagnetic field in the measuring device (11), which is influenced by the tobacco (12) which is arranged in a measuring volume (46) of the measuring apparatus (10), a circuit device (28) which comprises the measuring device (11) and which is designed to determine at least one suitable measurable variable of the alternating field influenced by the tobacco (12), and an evaluating device (21) which is designed for detection of the foreign body (90) by suitable evaluation of the measurable variable determined with the circuit device (28), wherein the measuring device (11) is a measuring capacitor designed as a plate capacitor with plate-like electrodes (15, 16), and wherein the frequency of the alternating field in the high-frequency range is more than 100 MHz and below 100 MHz,
**characterized in that**
a sensor (38) encompassing the measuring capacitor (11) is designed to feed the tobacco (12) through the space formed between the plate-like electrodes (15, 16) of the measuring capacitor (11), wherein
the plate-like electrodes (15, 16) of the measuring capacitor (11) are arranged substantially perpendicularly to an axial direction of transport of the tobacco (12) and wherein
the electrodes (15, 16) of the measuring capacitor (11) each have a central tobacco feedthrough opening as well as
on each plate-like electrode (15, 16) is provided a tubular, axially outwardly extending conducting surface (49) formed from the space formed between the plate-like electrodes and which encompasses the tobacco (12), wherein the conducting surface (49) forms a metallic chimney.

2. Measuring apparatus according to claim 1, **characterised in that** the sensor (38) includes two rotationally symmetrical, discoidal base bodies (40, 41) which are oriented perpendicularly to the transport direction and which are spaced apart from each other by means of an outer, annular, non-conductive boundary body (44) in such a way that the field-filled space (45) formed between the base bodies (40, 41) is radially closed off from the outside by the boundary body (44).

3. Measuring apparatus according to claim 1 or 2, **characterised in that** the circuit device (28) is substantially non-resonant at the measuring frequency of the alternating field which is used, and measurement is based on the propagation of a travelling high-frequency wave in the measuring capacitor (11).

4. Measuring apparatus according to claim 3, **characterised in that** the circuit device (28) is designed to determine at least one, preferably two measurable variables independent of each other and dependent on the amplitude and/or the phase shift of the high-frequency wave influenced by the tobacco (12).

5. Measuring apparatus according to claim 3 or 4, **characterised in that** the high-frequency field-generating device (13) has a control device (23-26; 223, 62-64, 226) for keeping constant the amplitude of the high-frequency wave generated.

6. Measuring apparatus according to any of claims 1 to 5, **characterised in that** a part (18) of the circuit device (28) which serves to determine the at least one measurable variable is constructed with digital electronics.

7. Measuring apparatus according to claim 6, **characterised in that** the device (18) for determining the measurable variables is designed to sample the measuring signal with a sampling frequency which is higher by a factor of n than the frequency of the high-frequency field.

8. Measuring apparatus according to claim 7, **characterised in that** the device (18) for determining the measurable variables comprises a digital processing device (67) for separately multiplying n sampled measurements by corresponding sine and cosine values, and for separately adding up these sine and cosine products.

9. Measuring apparatus according to any of claims 1 to 8, **characterised in that** a sensor (38) encompassing the measuring capacitor (11) is at least partially made of a material with a low temperature expansion coefficient.

10. Measuring apparatus according to any of claims 1 to 9, **characterised in that** a sensor (38) encompassing the measuring capacitor (11) has a device for keeping the temperature of the measuring capacitor (11) constant.

11. Measuring apparatus according to any of claims 1 to 10, **characterised in that** the electrodes (15, 16) of the measuring capacitor (11) are formed by a metal coating.

12. Measuring apparatus according to any of claims 1 to 11, **characterised in that** a sensor (38) encompassing the measuring capacitor (11) comprises a non-conducting portion (44; 144) for defining the field-filled space (45) of the measuring capacitor (11).

13. Measuring apparatus according to any of claims 1 to 12, **characterised in that** a sensor (38) encompassing the measuring capacitor (11) has a non-conducting tube (50; 150) directly surrounding the tobacco (12).

14. Measuring apparatus according to any of claims 1 to 13, **characterised in that** the field-filled space (45) formed between the electrodes (15, 16) of the measuring capacitor (11) is partially or completely filled with a dielectric material.

15. Measuring apparatus according to any of claims 1 to 14, **characterised in that** the circuit device (28) is designed to determine a measurable variable dependent on the capacitance of the measuring capacitor (11).

16. Measuring apparatus according to any of claims 1 to 15, **characterised in that** the circuit device (28) is designed to determine a measurable variable dependent on the loss factor of the measuring capacitor (11).

17. Measuring apparatus according to any of claims 1 to 16, **characterised in that** the measuring capacitor (11) forms part of an RC network (11, 29), preferably an RC differentiating network.

18. Measuring apparatus according to any of claims 1 to 17, **characterised in that** the circuit device (28) encompasses an operational amplifier (30), preferably an inverting operational amplifier.

19. Measuring apparatus according to any of claims 1 to 18, **characterised in that** the capacitance of the measuring capacitor (11) is less than 10 pF.

20. Measuring method for the detection of foreign bodies in tobacco, having a measuring device in which an alternating electromagnetic field is generated, which is influenced by a foreign body contained in the tobacco, wherein at least one suitable measurable variable of the alternating field influenced by the foreign body is determined, and the measurable variable determined is evaluated for detection of the foreign body, wherein a measuring capacitor is used as the measuring device, which is designed as a plate capacitor with plate-like electrodes (15, 16), and wherein an alternating field
with a frequency greater than 100 kHz and below 100 MHz is used,
**characterized in that**
the sensor (38) encompassing the measuring capacitor (11) is designed to feed the tobacco (12) through the space formed between the plate-like electrodes (15, 16) of the measuring capacitor (11), wherein
the plate-like electrodes (15, 16) of the measuring capacitor (11) are arranged substantially perpendicularly to an axial direction of transport of the tobacco (12) and wherein
the electrodes (15, 16) of the measuring capacitor (11) each have a central tobacco feedthrough opening as well as
on each plate-like electrode (15, 16) is provided a tubular, axially outwardly extending conducting surface (49) formed from the space formed between the plate-like electrodes and which encompasses the tobacco (12), wherein the conducting surface (49) forms a metallic chimney.

21. Measuring method according to claim 20, **characterised in that** measurement is carried out in non-resonant fashion by means of a travelling high-frequency wave.

22. Measuring method according to claim 21, **characterised in that** at least one measurable variable dependent on the amplitude and/or the phase shift of the high-frequency wave influenced by the foreign body is determined.

23. Measuring method according to claim 21 or 22, **characterised in that** the measuring signal is sampled with a sampling frequency which is higher by a factor of n than the frequency of the high-frequency wave.

24. Measuring method according to claim 23, **characterised in that** in each case n sampled measurements are multiplied separately by corresponding sine and cosine values, and these sine and cosine products are added up separately.

## Revendications

1. Dispositif de mesure (10) pour identifier des corps étrangers (90) dans du tabac (12), comprenant un système de mesure (11), un dispositif (13) pour générer un champ alternatif électromagnétique dans le système de mesure (11), lequel champ est influencé par le tabac (12) disposé dans un volume de mesure (46) du dispositif de mesure (10), un circuit (28) comprenant le système de mesure (11), qui est conçu pour déterminer au moins une grandeur de mesure appropriée du champ alternatif influencé par le tabac (12), et un dispositif d'évaluation (21) conçu pour identifier le corps étranger (90) par une évaluation appropriée de la grandeur de mesure déterminée au moyen du circuit (28), le système de mesure (11) étant un condensateur de mesure réalisé en tant que condensateur à plaques pourvu d'électrodes (15, 16) sous forme de plaques, la fréquence du champ alternatif dans la plage à haute fréquence étant supérieure à 100 kHz et inférieure à 100 MHz,
**caractérisé en ce que** le capteur (38) comprenant le condensateur de mesure (11) est conçu pour le passage du tabac (12) à travers l'espace formé entre les électrodes en forme de plaques (15, 16) du condensateur de mesure (11), les électrodes en forme de plaques (15, 16) du condensateur de mesure (11) étant disposées de manière sensiblement perpendiculaire à une direction de transport axiale du tabac (12) et les électrodes (15, 16) du condensateur de mesure (11) présentant respectivement une ouverture centrale de passage du tabac,
et **en ce qu'**est prévue, sur chaque électrode en forme de plaque (15, 16), une surface conductrice (49) tubulaire renfermant le tabac (12) et s'étendant axialement vers l'extérieur à partir de l'espace formé entre les électrodes en forme de plaques, les électrodes en forme de plaques s'étendant en direction radiale au-delà de la surface tubulaire.

2. Dispositif de mesure selon la revendication 1, **caractérisé en ce que** le capteur (38) comprend deux corps de base (40, 41) en forme de disques, symétriques en rotation et orientés perpendiculairement à la direction de transport, qui sont espacés l'un de l'autre au moyen d'un corps de limitation (44) extérieur annulaire, non conducteur, de telle sorte que l'espace (45) formé entre les corps de base (40, 41) et où règne un champ est obturé radialement vers l'extérieur par le corps de limitation (44).

3. Dispositif de mesure selon la revendication 1 ou 2, **caractérisé en ce que** le circuit (28), à la fréquence de mesure utilisée du champ alternatif, est sensiblement non-résonant et **en ce que** la mesure repose sur la propagation d'une onde haute fréquence en cours dans le condensateur de mesure (11).

4. Dispositif de mesure selon la revendication 3, **caractérisé en ce que** le circuit (28) est conçu pour déterminer au moins une, de préférence deux grandeur(s) de mesure indépendantes l'une de l'autre et dépendantes de l'amplitude et/ou du décalage de phases de l'onde haute fréquence influencée par le produit (12).

5. Dispositif de mesure selon la revendication 3 ou 4, **caractérisé en ce que** le dispositif de génération d'un champ haute fréquence (13) présente un dispositif de régulation (23-26 ; 223, 62-64, 226) pour maintenir à une valeur constante l'amplitude de l'onde haute fréquence générée.

6. Dispositif de mesure selon l'une des revendications 1 à 5, **caractérisé en ce qu'**un élément (18) du circuit (28) servant à déterminer la (les) grandeur(s) de mesure, au moins au nombre de une, est un élément électronique numérique.

7. Dispositif de mesure selon la revendication 6, **caractérisé en ce que** le dispositif de détermination de grandeur de mesure (18) est conçu pour lire le signal de mesure à une fréquence d'échantillonnage qui est supérieure d'un facteur n à la fréquence du champ haute fréquence.

8. Dispositif de mesure selon la revendication 7, **caractérisé en ce que** le dispositif de détermination de grandeur de mesure (18) présente un dispositif de traitement numérique (67) pour la multiplication séparée de n valeurs de mesure lues par des valeurs de sinus et cosinus correspondantes et pour la totalisation séparée de ces produits de sinus et de cosinus.

9. Dispositif de mesure selon l'une des revendications 1 à 8, **caractérisé en ce que** le capteur (38) comprenant le condensateur de mesure (11) est constitué au moins en partie d'un matériau à faible coefficient de dilatation thermique.

10. Dispositif de mesure selon l'une des revendications 1 à 9, **caractérisé en ce que** le capteur (38) comprenant le condensateur de mesure (11) présente un dispositif pour maintenir à une valeur constante la température du condensateur de mesure (11).

11. Dispositif de mesure selon l'une des revendications 1 à 10, **caractérisé en ce que** les électrodes (15, 16) du condensateur de mesure (11) sont formées d'un revêtement métallique.

12. Dispositif de mesure selon l'une des revendications 1 à 11, **caractérisé en ce que** le capteur (38) comprenant le condensateur de mesure (11) présente un élément non conducteur (44; 144) destiné à limiter l'espace (45) du condensateur de mesure (11) où règne un champ.

13. Dispositif de mesure selon l'une des revendications 1 à 12, **caractérisé en ce qu'**un capteur (38) comprenant le condensateur de mesure (11) présente un tube (50, 150) non conducteur entourant directement le tabac (12).

14. Dispositif de mesure selon l'une des revendications 1 à 13, **caractérisé en ce que** l'espace (45) formé entre les électrodes (15, 16) du condensateur de mesure (11) et où règne un champ est rempli partiellement ou en totalité par un matériau diélectrique.

15. Dispositif de mesure selon l'une des revendications 1 à 14, **caractérisé en ce que** le circuit (28) est conçu pour déterminer une grandeur de mesure dépendante de la capacité du condensateur de mesure (11).

16. Dispositif de mesure selon l'une des revendications 1 à 15, **caractérisé en ce que** le circuit (28) est conçu pour déterminer une grandeur de mesure dépendante du facteur de dissipation du condensateur de mesure (11).

17. Dispositif de mesure selon l'une des revendications 1 à 16, **caractérisé en ce que** le condensateur de mesure (11) fait partie d'un circuit RC, de préférence d'un comparateur RC.

18. Dispositif de mesure selon l'une des revendications 1 à 17, **caractérisé en ce que** le circuit (28) comprend un amplificateur opérationnel (30), de préférence un amplificateur opérationnel inverseur.

19. Dispositif de mesure selon l'une des revendications 1 à 18, **caractérisé en ce que** la capacité du condensateur de mesure (11) est inférieure à 10 pF.

20. Procédé de mesure pour identifier des corps étrangers dans du tabac au moyen d'un système de mesure dans lequel est généré un champ alternatif électromagnétique qui est influencé par un corps étranger présent dans le tabac, dans lequel au moins une grandeur de mesure appropriée du champ alternatif influencé par le corps étranger est déterminée et la grandeur de mesure déterminée est évaluée pour identifier le corps étranger, un condensateur de mesure conçu en tant que condensateur à plaques pourvu d'électrodes sous forme de plaques (15, 16) étant utilisé comme système de mesure, et un champ alternatif ayant une fréquence supérieure à 100 kHz et inférieure à 100 MHz étant utilisé,
**caractérisé en ce que** le capteur (38) comprenant le condensateur de mesure (11) est conçu pour le passage du tabac (12) à travers l'espace formé entre les électrodes en forme de plaques (15, 16) du condensateur de mesure (11), les électrodes en forme de plaques (15, 16) du condensateur de mesure (11) étant disposées de manière sensiblement perpendiculaire à une direction de transport axiale du tabac (12), et les électrodes (15, 16) du condensateur de mesure (11) présentant respectivement une ouverture centrale de passage du tabac,
et **en ce qu'**est prévue, sur chaque électrode en forme de plaques (15, 16), une surface conductrice (49) tubulaire renfermant le tabac (12) et s'étendant axialement vers l'extérieur à partir de l'espace formé entre les électrodes en forme de plaques, les électrodes en forme de plaques s'étendant en direction radiale au-delà de la surface tubulaire.

21. Procédé de mesure selon la revendication 20, **caractérisé en ce que** la mesure est exécutée de manière non-résonante au moyen d'une onde haute fréquence en cours.

22. Procédé de mesure selon la revendication 21, **caractérisé en ce qu'**est déterminée au moins une grandeur de mesure dépendante de l'amplitude et/ou du décalage de phases de l'onde haute fréquence influencée par le corps étranger.

23. Procédé de mesure selon la revendication 21 ou 22, **caractérisé en ce que** le signal de mesure est lu selon une fréquence d'échantillonnage qui est supérieure d'un facteur n à la fréquence de l'onde haute fréquence.

24. Procédé de mesure selon la revendication 23, **caractérisé en ce que** respectivement n valeurs de mesure lues sont multipliés séparément par des valeurs de sinus et de cosinus correspondantes et **en ce que** ces produits de sinus et cosinus sont totalisés séparément.
